# EUROPEAN PATENT APPLICATION

(11) **EP 1 726 787 A2**
(43) Date of publication of application: **29.11.2006**
(21) Application number: 06252224.8
(22) Date of filing: 26.04.2006
(51) Int. Cl.: F01D 21/04, F01D 25/24

(54) **Containment casing for an aircraft engine**

(30) Priority: 24.05.2005 GB 0510540
(71) Applicant: Rolls-Royce plc, London SW1E 6AT (GB)
(72) Inventor: Peng, Caetano, Shardlow, Derbyshire, DE72 2GZ (GB)
(74) Representative: Gunn, Michael Alan

(57) **Abstract**

A containment casing 1 is provided in which tubular composite layers 2, 3 are arranged in an angular staggered relationship to minimise overlap between the interstitial spacing between tubes in each respective layer 2, 3. In such circumstances, with a continuous planar layer 4, 5 on one or both sides, operational integrity is maintained with a lightweight containment casing 1 in comparison with prior arrangements but retaining resistance to fragment penetration.

## Description

The present invention relates to containment casings and more particularly to containment casings utilised with respect to aircraft engines as well as methods of manufacturing such casings.

Metal and non-metal tubular structures have been used in automobile, aircraft, train systems (i.e. locomotive and coach structural bodies) and nuclear containers for several years. There are many academic publications about the mechanical behaviour of single tube and closely packed tubular structures. These tubes have very high load bearing, crushing and energy absorption capabilities. The energy absorbing process is either by axial tubular buckling (i.e. concertina buckling) or lateral tubular crushing. They can withstand high impact load levels. The impact resistance and energy absorption efficiency of the tubular systems depend on the cell wall solid material properties, cross-section shape, diameter/length to thickness ratio, loading direction, packing arrangement and whether they are internally empty or filled. They can be made of monolithic metals, metal or non-metal composites or both. Composites materials, cellular and structural materials are known to have low density and high mechanical strength and stiffness. Because of the high specific mechanical properties (i.e. strength per unit mass or density), they are ideal materials for lightweight structures and components. Polymeric based composites (i.e. fibreglass, carbon fibre and Kevlar in polymeric matrix) are also resistant to corrosion.

It will be understood that containment casings for different situations will have different objectives. However, generally by reason of the necessity for containment it is important that these casings provide a high penetration resistance in order to prevent release of projectile fragmentary material. Thus, for example with respect to aircraft engine casings it will be understood that the rotating blades may fracture and therefore the containment casing must resist penetration of those fragments through the casing whereby the fragments at high velocity may injure persons in the vicinity or an associated aircraft body fuselage or wing. In such circumstances there is a tendency to utilise monolithic plate like structures in order to create sufficient resistance to fragment penetration. Unfortunately, planar structures whether formed by laminates or single layer material are generally solid and therefore may have a higher weight than desirable.

In accordance with the present invention there is provided a containment casing for a rotating assembly, the casing comprising a first tubular composite layer comprising a plurality of tubular members and a second tubular composite layer comprising a plurality of tubular members, the first tubular composite layer and the second tubular composite layer angularly staggered relative to each other to limit overlap of interstices between tubular members in each respective composite layer with the other composite layer.

The rotating assembly may be part of an aircraft engine.

Preferably a continuous planar ring is secured to one side of the casing. Additionally, continuous planar rings are secured either side of the casing with the first tubular composite layer and the second tubular composite layer sandwiched between them.

Normally, the tubular members are hollow. Alternatively, the tubular members are filled in order to alter the mechanical properties of the tubular composite layer overall or in selective parts thereof. Typically, the mechanical property altered by filling the tubular member is acoustic damping or vibration damping or mechanical stiffness of the composite layer.

Also, in accordance with the present invention there is provided a method of forming a containment casing for a rotating assembly, the method comprising;
a) forming a first composite tubular layer of tubular members and a second composite tubular layer of tubular members, associating the first composite tubular layer with the second composite tubular layer with an angular stagger relation between them; and,
b) fixing the first composite layer and the second composite layer with the angular stagger relation between them to limit overlap of interstices between tubular members in each respective composite layer with the other composite layer.

Typically, the method also includes association securing a continuous planar ring to one side of the casing. Typically, a continuous planar ring is secured upon both sides of the casing.

Generally, the casing is cylindrical.

Typically, the angular stagger between the first composite layer and the second composite layer is perpendicular.

Embodiments of the present invention will now be described by way of example only with reference to the accompanying drawings in which
Fig. 1 is a schematic front perspective view of a containment casing with a quarter section removed;
Fig. 2 is a more detailed schematic representation of the containment casing structure depicted in Fig. 1; and
Fig. 3 is a schematic depiction of tubular members utilised in accordance with the present invention to provide tubular composite layers.

Prior planar laminate composite structures as indicated can create sufficiently robust component structures to act as containment casings for aircraft turbines and blades. Nevertheless, there is a constant desire to reduce component weights within an aircraft in order to improve efficiency. In such circumstances the present invention comprises combining tubular composite layers in a sandwich with, if necessary, a continuous planar ring or layer to provide the containment casing.

The tubular composite layers are formed from tubular members secured adjacent each other generally in alignment. At least one further tubular composite layer is associated with the first tubular composite layer in an angular staggered relationship in order to minimise the overlap of the interstices between the tubes in each tubular composite layer. Normally, a continuous planar layer is secured either side of the tubular composite layers in order to create the casing.

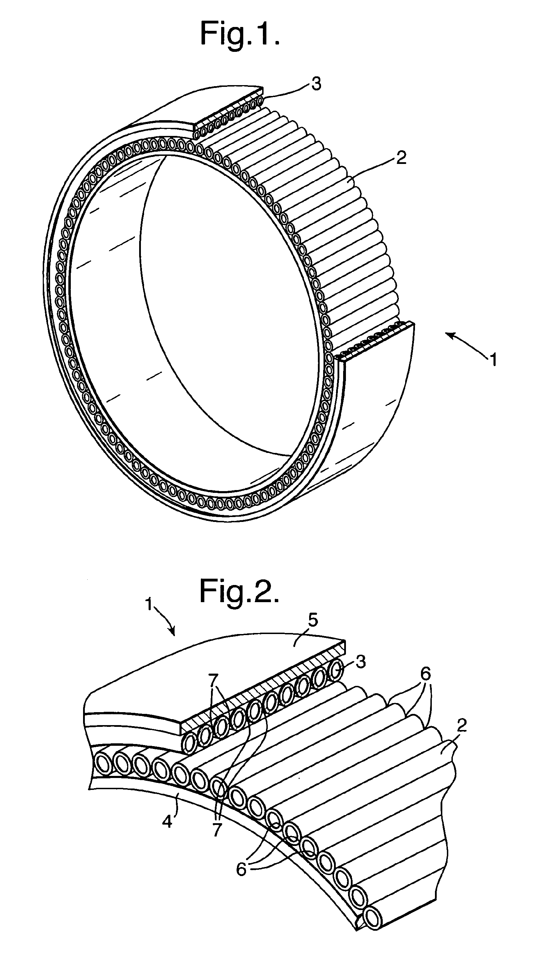

Referring to Figures 1 and 2 of the attached drawings, these illustrate a containment casing in accordance with the present invention. A first tubular composite layer 2 comprises a number of tubular members arranged longitudinally, parallel to the engine axis, and a second tubular composite layer 3 comprises a number of tubular members arranged circumferentially to form rings. A thin planar layer 4, 5 is provided either side of the tubular composite layers 2, 3. The angular stagger between the tubular composite layers 2 and 3 provides a robust containment casing in which the interstices 6, 7 between the tubes of the tubular composite layers 2, 3 have the minimum overlap. It will be appreciated that it is at these overlapping interstices that there is less resistance to fragment penetration.

As depicted the angular stagger is generally perpendicular, that is to say there is a ninety degree angular variation in the orientation of the tubes in the respective tubular composite layers 2, 3. However, it will be appreciated that other angular presentations of the tubes in the composite layers 2, 3 could be provided as required particularly if several more levels of composite containment layer are provided again to further minimise the stacked overlap of the interstices between the tubes in the respective composite layers 2, 3.

The planar continuous ring 5, 6 acts to provide an aerodynamic and corrosion resistance to the containment casing, but these planar continuous layers 4, 5 will be relatively thin and so normally will not be sufficient to provide fragmentation containment as required by a casing to resist penetration of shattered fragments from a high speed rotating blade or other member. Clearly, solid planar layers are relatively heavy so their thickness should be minimised to reduce weight with aircraft components.

As can be seen in Figs. 1 and 2, the tubular containment layers 2, 3 can be formed from individual extruded or monolithic tubes which may be of a polymeric, ceramic or metal nature. Alternatively, these tubes may be wound from fibre to form the tubes in accordance with known techniques. Nevertheless, all the tubes within each tubular composite layer 2, 3 are generally aligned with each other.

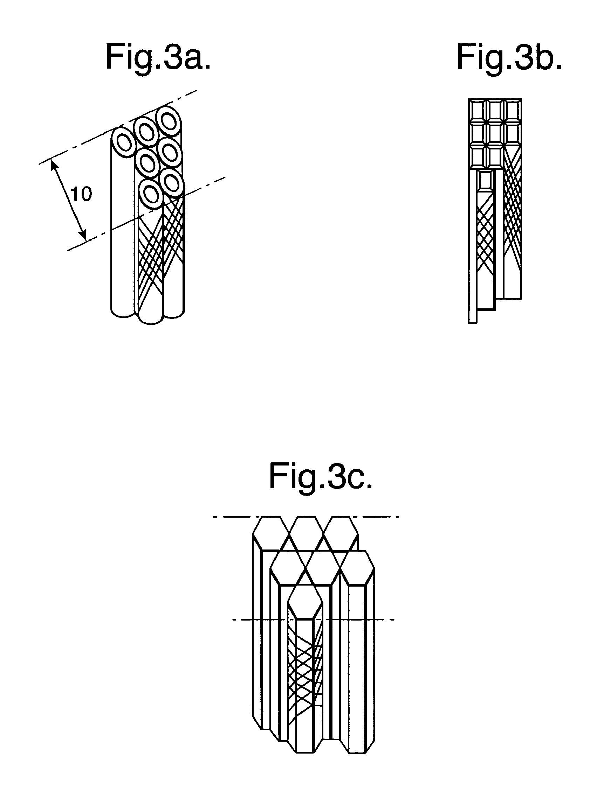

In addition to single rows of tubes to form the respective tubular composite layers 2, 3 it is possible to provide multiple rows of smaller tubes also aligned to form each individual composite layer 2, 3. Fig. 3 illustrates some examples.

Fig. 3a illustrates bundles of micro cylindrical woven tubes arranged in staggered rows in order to create a tubular composite layer defined with a depth 10. Although all cylindrical it will be appreciated that different sized diameter cylindrical tubes may be used with differing wind angles for the tubes when formed as woven structures from filaments in order to achieve the desired structural performance.

Fig. 3b illustrates combinations of rectangular tubes in order to provide a tubular composite layer. It will be appreciated that these rectangular tubes provide closer and therefore stronger association between the individual tubes in forming the layer with less interstitial spacing in order that thereby greater resistance to fragment penetration is achieved.

Fig. 3c illustrates hexagonal tubes again utilised in order to create a tubular composite layer in accordance with the present invention and again through the flat sides of the hexagonal tubes greater tube to tube contact and therefore assembly strength is achieved.

As indicated above, generally woven tubes formed from micro fibre can be used in accordance with the present invention. It is appreciated that the angle of wind as well as the depth of tube can be thereby adjusted to form highly robust tube structures with great strength but with a hollow centre thereby reducing containment casing weight in comparison with an equivalent performing solid wall containment casing. Nevertheless, these hollow tubes may be filled with a foam or other material in order to adjust their mechanical properties or provide acoustic damping or vibration damping as required. It will also be understood that localised mechanical performance may be altered to meet localised requirements. For example, it may be that increased fragment penetration resistance is required at certain parts of the containment casing as a result of the normal expected position of persons who may be injured by such fragments or the location of sensitive control or operational features which may be damaged by such fragments. In such circumstances, weight in the casing material is optimised in terms of achieving a lightweight containment casing for the remainder of the casing with higher protection but higher weight only in necessary parts of the casing.

In accordance with the present invention the tubular composite layers are constructed from hollow or filled composite tubes made of either polymeric, metal based composites, ceramic or both. These tube members can have different cross-sectional shapes, orientation, wall thickness, diameters, cell length and varying thickness. The tubes can be monolithic, multi layered tubes or both in the same composite layer. The tubes can also be fibre woven tubes at any chosen orientation in order to achieve the best performance in relation to weight required for a particular containment casing. Furthermore, as indicated, the tubes can be filled with polymeric, metal, foam or both or liquids in order to vary the mechanical performance or other factors such as vibration damping. Generally, the tubes are positioned and arranged to be loaded laterally under impact load conditions. The tubular composite layers are generally fixed in a matrix and possibly fibre stitched together. If the tubes are formed from a metal they can be welded or encased in a similar fashion to roller bearings in order to retain their position.

The objective with a containment casing is to design a high strength and high impact resistance lightweight composite to achieve higher engine efficiencies.

By utilising the hollow nature of tubes these objectives of high strength and impact resistance whilst achieving a lightweight construction are readily achievable. Furthermore, by combination of infill within these tubes as required to adjust mechanical and other properties of the containment casing as well as variations in geometries and use of differing materials, it will be understood that containment casings more tuned to particular requirements for an engine are achievable in comparison with prior arrangements.

With regard to aircraft engines, typically the casing will be substantially cylindrical such that by providing flexibility as well as stiffness within the containment casing, absorption of fragments from a high speed disintegrating blade can be achieved. As indicated, the tubes may be filled with foam or elastomeric materials or solid infill to achieve this absorption and variation in stiffness along with acoustic and vibration damping.

It will be appreciated that particularly when the tubular composite layers 2, 3 are sandwiched between continuous planar layers 4, 5, utilisation of the differential thermal expansions of these continuous ring layers 4, 5 may be utilised in order to compress the sandwiched tubular composite layers 2, 3 therebetween in order that further variation in the mechanical properties, resistance to fragment penetration and deformation can be achieved along with alterations dependent upon vibration and/or acoustic requirements for the containment casing 1. Furthermore, the utilisation of tubular composite layers 2, 3 between the inner continuous ring layer 4 and the outer continuous ring layer 5 may be utilised in order to accommodate for the possibly high temperature differential between that experienced by the inner continuous ring 4 and the outer continuous ring 5 without creating overstressing therebetween. It will be understood in these circumstances the tubular composite layers 3, 4 will essentially allow for expansion and contraction by their deformation to accommodate such variations in temperature experienced by the layers 4, 5.

Modification and alterations to the embodiments of the invention will be understood by those skilled in the technology. Thus, for example the tubular multi-layered containment casing can be made of more than two tubular layers. The materials used to form the layers may include polymeric fibres and matrix, monolithic metals, metal fibres and matrix, a ceramic or combination of these dependent upon operational requirements. The skin to the components may be a metal, erosion resistant material, polymeric or laminated surface skins.

Such containment casings may be used, of course, in other applications than aircraft engines, where a rotating assembly requires a protective casing around it. Such assemblies include, but are not limited to: flywheels; impellers; armatures or other rotating assemblies in electrical motors or generators.

In terms of manufacturing, typically the processes will involve one or more of the following, namely injection moulding techniques, weaving/stitching, fibre wrapping around lateral blade profiles, tubular systems embedded in polymeric, metal or ceramic matrixes or use of ferrules to locate the tubes and to provide additional lateral strength and stiffness. Essentially, what is required is creation of the desired shaping by appropriate techniques whilst maintaining sufficient structural strength and profile under load for operational performance.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A containment casing for a rotating assembly, the casing comprising a first tubular composite layer (2) comprising a plurality of tubular members and a second tubular composite layer (3) comprising a plurality of tubular members, the first tubular composite layer and the second tubular composite layer angularly staggered relative to each other to limit overlap of interstices between tubular members (6, 7) in each respective composite layer with the other composite layer.

2. A containment casing as in claim 1, wherein the rotating assembly is part of an aircraft engine.

3. A casing as claimed in claim 1 or claim 2, wherein a continuous planar ring is secured to one side of the casing.

4. A casing as claimed in claim 3, wherein continuous planar rings (4, 5) are secured either side of the casing with the first tubular composite layer (2) and the second tubular composite layer (3) sandwiched between them.

5. A casing as claimed in any preceding claim, wherein the tubular members are hollow.

6. A casing as claimed in any of claims 1 to 4, wherein the tubular members are filled in order to alter at least one mechanical property of the tubular composite layer overall or in selective parts thereof.

7. A casing as claimed in claim 6, wherein the or each mechanical property altered by filling the tubular member is selected from the list consisting of: acoustic damping, vibration damping, mechanical stiffness of the composite layer.

8. A casing as claimed in any preceding claim, wherein the casing is cylindrical.

9. A casing as claimed in any preceding claim, wherein the angular stagger between the first composite layer (2) and the second composite layer (3) is perpendicular.

10. A method of forming a containment casing for a rotating assembly, the method comprising:
a) forming a first composite tubular layer (2) of tubular members and a second composite tubular layer (3) of tubular members, associating the first composite tubular layer (2) with the second composite tubular layer (3) with an angular stagger relation between them; and,
b) fixing the first composite layer (2) and the second composite layer (3) with the angular stagger relation between them to limit overlap of interstices between tubular members (6, 7) in each respective composite layer with the other composite layer.

11. A method as claimed in claim 10, wherein the method also includes association securing a continuous planar ring to one side of the casing.

12. A method as claimed in claim 11, wherein a continuous planar ring is secured upon both sides (4, 5) of the casing.

13. An aircraft engine incorporating a containment casing as claimed in any of claims 1 to 9.

14. An aircraft engine incorporating a containment casing manufactured in accordance with the method of any of claims 10 to 12.
